# EUROPEAN PATENT APPLICATION

(11) **EP 4 636 918 A1**
(43) Date of publication of application: **22.10.2025**
(21) Application number: 25170989.5
(22) Date of filing: 16.04.2025
(51) Int. Cl.: H01M 50/204, H01M 50/209, H01M 50/264, H01M 50/296, H01M 50/505, H01M 50/507, H01M 50/517, H01R 4/26, H01R 4/56

(54) **ENERGY STORAGE SYSTEM**

(30) Priority: 18.04.2024 KR 20240052368
(71) Applicant: SAMSUNG SDI CO., LTD., Yongin-si, Gyeonggi-do 17084 (KR)
(72) Inventor: SHIN, Joonho, 17084 Yongin-si, Gyeonggi-do (KR)
(74) Representative: Gulde & Partner

(57) **Abstract**

An energy storage system is disclosed includes a cell assembly that includes a plurality of battery cells. A rack case accommodates the cell assembly. A terminal portion is electrically connected to the battery cells and includes an insertion portion formed in an outer surface of the terminal portion. A rack busbar is fastened to the terminal portion and includes a protruding portion inserted into the insertion portion of the terminal portion, with the protruding portion being formed on a side surface of the rack busbar.

## Description

### BACKGROUND OF THE INVENTION

### (a) Field of the Invention

The present disclosure relates to an energy storage system (or an energy storage device) in which a foreign substance such as a dust or the like is not introduced between a rack busbar and a terminal portion.

### (b) Description of the Related Art

An energy storage system (ESS) is a system capable of storing surplus electricity or electricity generated by utilizing renewable energy. Idle power may be stored at a time when electricity demand is low using the ESS, and then electricity may be supplied at a time when electricity demand is high, so that electric power supply and demand are smoothly controlled.

A space or a facility in which an ESS is installed and operated should be equipped to suppress a fire of a battery caused by an electric shock, a short circuit, an external surge, or the like. A typical fire extinguishing system includes a fire detection sensor, a spring cooler or a fire extinguishing agent sprayer installed around a battery rack or at a ceiling, and the like.

An ESS may include a cell assembly in which a plurality of battery cells are stacked inside a rack case, and a plurality of cell assemblies are electrically connected to each other by a rack busbar and a terminal portion.

During land and sea evaluation of a mobile uninterruptable power supply (UPS) of the ESS, dust generated by vibration is frequently introduced between the rack busbar and the terminal portion, which can cause a problem in that stability is reduced due to an increase in a contact resistance (IR).

### SUMMARY OF THE INVENTION

Embodiments of the present disclosure provide an energy storage system (or an energy storage device) capable of improving stability without increasing a contact resistance by preventing foreign substances such as dust or the like from flowing into a portion between a rack busbar and a terminal portion.

An energy storage system according to embodiments of the present disclosure includes: a cell assembly including a plurality of battery cells; a rack case in which the cell assembly is accommodated; a terminal portion that is electrically connected to the battery cells and includes an insertion portion formed in an outer surface of the terminal portion; and a rack busbar that is fastened to the terminal portion and includes a protruding portion inserted into the insertion portion of the terminal portion, the protruding portion being formed on a side surface of the rack busbar.

The terminal portion may include: a terminal plate that is electrically connected to the battery cells inside the rack case; and a terminal block that is connected to the terminal plate and protrudes outside of the rack case, with the terminal block including the insertion portion into which the protruding portion is inserted.

The insertion portion may include: a first insertion groove formed in an outer surface of the terminal block, the first insertion groove extending a first length in a first direction on an outer surface of the terminal block; and a second insertion groove formed in an outer surface of the terminal block, the second insertion groove extending a second length in a second direction.

The first direction may be a width direction of the terminal block.

The first insertion groove may have a triangular cross-sectional shape inside the terminal block.

The second direction may be a length direction of the terminal block.

Second insertion grooves may be formed at edges of opposite sides of the terminal block.

The second insertion grooves may be formed in tapered shapes at the edges of opposite sides of the terminal block.

The rack busbar may include: a busbar plate that is in contact with a surface of the terminal block, the busbar plate being fixed to the terminal block by a fastening member and; and the protruding portion protrudes from an edge of the busbar plate.

The protruding portion may include: a first protruding portion that protrudes from one edge of the busbar plate and is inserted into the first insertion groove; and second protruding portions that protrude from edges of opposite sides of the busbar plate and are inserted into the second insertion groove.

Each of the first and second protruding portions are formed in triangular cross-sectional shapes.

The first and second protruding portions may be connected to each other at the edge of the busbar plate.

An energy storage system according to further embodiments of the present disclosure includes a plurality of battery cells; a case accommodating the battery cells; a terminal portion electrically connected to the battery cells, the terminal portion including at least one groove formed in a surface of the terminal portion; and a rack busbar fastened to the terminal portion, the rack busbar including at least one a protruding portion inserted into the at least one groove of the terminal portion, the protruding portion being formed on a surface of the rack busbar.

According to the embodiments of the present disclosure, because a protruding portion of a rack busbar is inserted into an insertion groove formed in a terminal portion, a space may not be formed between the rack busbar and the terminal portion so that foreign substances such as dust may not enter the rack case.

According to the embodiments of the present disclosure, dust generated by vibration during land and sea evaluation of an uninterruptible power supply (UPS) or the like of an energy storage system may not move between the rack busbar and the terminal portion into the rack case, thus increase in contact resistance due to dust is prevented and durability of the UPS is improved.

### BRIEF DESCRIPTION OF THE DRAWINGS

FIG. 1 is a perspective view schematically showing an energy storage system according to embodiments of the present disclosure.
FIG. 2 is a main portion perspective view schematically showing the energy storage system of FIG. 1.
FIG. 3 is a main portion perspective view schematically showing a state in which a rack busbar of the energy storage system according to the embodiments of the present disclosure is separated from a terminal portion.
FIG. 4 is a main portion cross-sectional view schematically showing a state in which the rack busbar of FIG. 3 is connected to the terminal portion by a fastening member.
FIG. 5 is a main portion perspective view schematically showing a state in which the terminal portion installed according to embodiments of the present disclosure is installed.
FIG. 6 is a main portion cross-sectional view schematically showing a state in which the terminal portion of FIG. 5 is installed.
FIG. 7 is a perspective view schematically showing the rack busbar according to embodiments of the present disclosure.
FIG. 8 is a main portion perspective view schematically showing the rack busbar of FIG. 7.

### DETAILED DESCRIPTION OF THE EMBODIMENTS

Embodiments of the present disclosure will be described more fully hereinafter with reference to the accompanying drawings so that those skilled in the art may easily implement the embodiments. The present disclosure may be modified in various different ways, all without departing from the scope of the present disclosure. In order to clearly describe the present disclosure, parts or portions that are irrelevant to the description are omitted in the drawings, and identical or similar constituent elements throughout the specification are denoted by the same reference numerals.

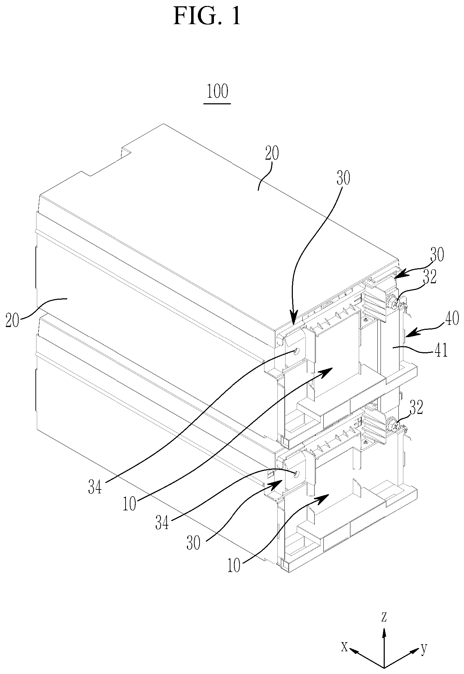

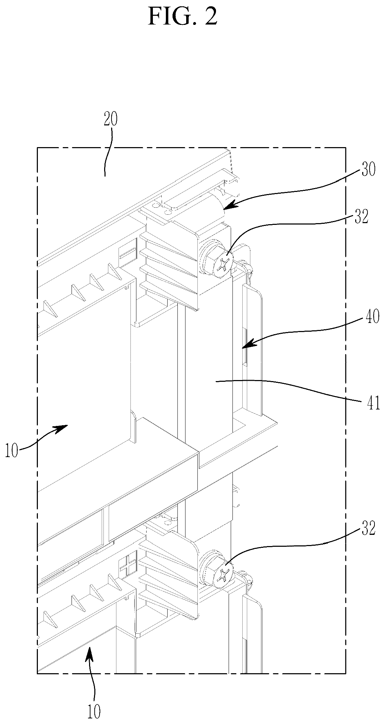

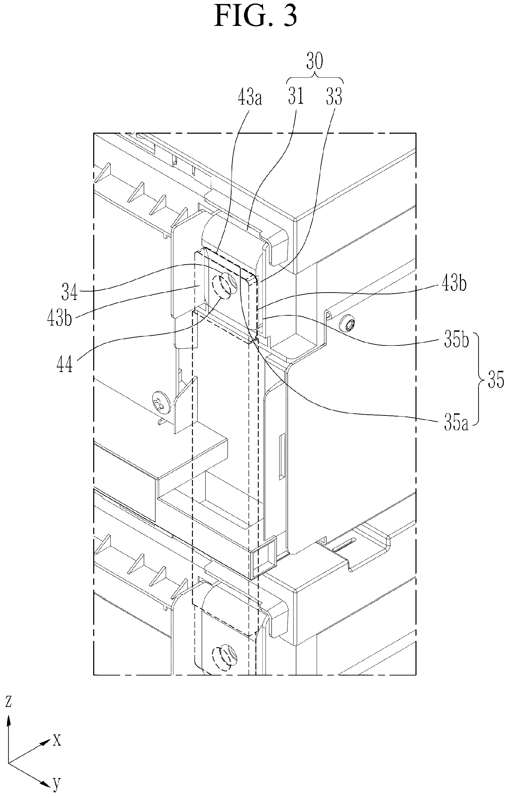

FIG. 1 is a perspective view schematically showing an energy storage system according to embodiments of the present disclosure, FIG. 2 is a main portion perspective view schematically showing the energy storage system of FIG. 1, and FIG. 3 is a main portion perspective view schematically showing a state in which a rack busbar of the energy storage system according to the embodiments of the present disclosure is separated from a terminal portion.

As shown in FIGS. 1 to 3, the energy storage system 100 according to the embodiments of the present disclosure may include one or more cell assemblies 10 in which a plurality of battery cells are stacked and a rack case 20 in which the cell assembly 10 is accommodated. A terminal portion 30 is installed to the rack case 20 and is electrically connected to the cell assembly 10. The terminal portion 30 has an insertion portion 35 formed at a portion of an outer surface thereof. A rack busbar 40 is fastened to the terminal portion 30, with the rack busbar 40 including a protruding portion 43 formed on a side surface of the rack busbar 40 and inserted into the insertion portion 35 of the terminal portion 30.

The cell assembly 10 may be formed by stacking a plurality of battery cells in a state where they are electrically connected to each other. The battery cells may be rechargeable batteries and may be provided as pouch-type rechargeable batteries, angular rechargeable batteries, or cylindrical rechargeable batteries. Hereinafter, in the present embodiment, the battery cell is described as the pouch-type secondary battery, but the invention is not limited thereto. One or more of the battery cells may be provided. Hereinafter, in the present embodiment a plurality of battery cells are provided.

The rack case 20 may accommodate one or more plurality of battery cells. To this end, an accommodation space for accommodating the plurality of battery cells may be provided in the rack case 20.

The terminal portion 30 electrically connected to the battery cells may be installed to the rack case 20. The terminal portion 30 may be electrically connected to the plurality of battery cells, protrude outwardly from the rack case 20, and be connected to the rack busbar 40.

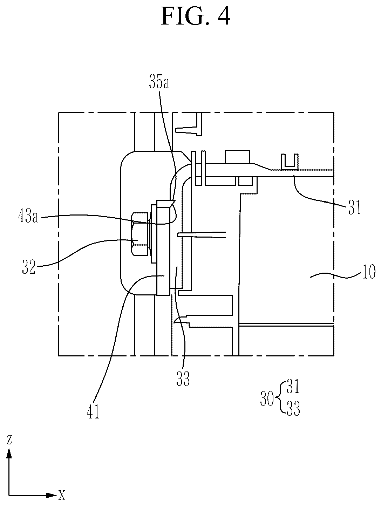

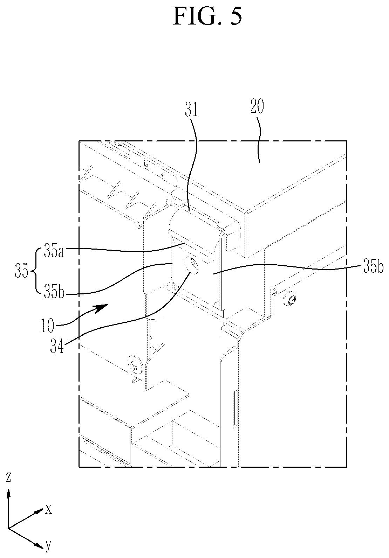

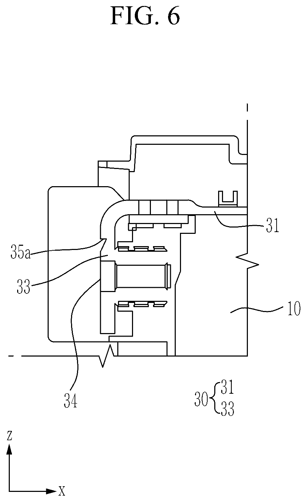

FIG. 4 is a main portion cross-sectional view schematically showing a state in which the rack busbar of FIG. 3 is connected to the terminal portion by a fastening member, FIG. 5 is a main portion perspective view schematically showing a state in which the terminal portion installed according to embodiments of the present disclosure is installed, and FIG. 6 is a main portion cross-sectional view schematically showing a state in which the terminal portion of FIG. 5 is installed.

Referring to FIGS. 4 to 6, the terminal portion 30 may include a terminal plate 31 electrically connected to the battery cell inside the rack case 20 and a terminal block 33 connected to the terminal plate 31. The terminal block may protrude to outside of the rack case 20 and include the insertion portion 35 formed on an outer surface into which the protruding portion 43 the rack busbar 40 is inserted.

The terminal plate 31 inserted into the rack case 20 may be formed with a thickness smaller than that of the terminal block 33 to ensure a stable electrical connection to the battery cell, inside the rack case 20.

One side of the terminal block 33 may be connected to the terminal plate 31, and the other side of the terminal block 33 may protrude to the outside of the rack case 20 to be connected to the rack busbar 40.

In a state in which the terminal block 33 protrudes to outside of the rack case 20, the terminal block 33 may be electrically connected by a portion of an outer surface of the terminal block 33 being in surface contact with a surface of the rack busbar 40.

The terminal block 33 and the rack busbar 40 may be fixed to each other by a fastening member 32. To this end, a first coupling hole 34 for coupling the fastening member 32 may be formed in the terminal block 33, and a second coupling hole 44 for coupling the fastening member 32 may be formed in the rack busbar 40. The fastening member 32 may be embodied as a bolt member. The first and second coupling holes 34 and 44 may be formed to align with each other when the terminal block 33 and the rack busbar 40 are in surface contact with each other. The first and second coupling holes 34 and 44 may be respectively formed in the terminal block 33 and the rack busbar 40 as screw hole shapes with the same or similar diameters to be electrically connected to each other by the fastening member 32.

The insertion portion 35 may be formed on a surface of the terminal block 33. By forming the insertion portion 35 at the terminal block 33, foreign substances, such as a dust or the like, are prevented from flowing into the rack case 20 due to the protruding portion 43 of the rack busbar 40 (described below) being inserted into the insertion portion 35.

The insertion portion 35 may include a first insertion groove 35a with a first length formed in a first direction on an outer surface of the terminal block 33, and a second insertion groove 35b with a second length formed in a second direction on the outer surface of the terminal block 33.

The first insertion groove 35a may be formed on the outer surface of the terminal block 33 to have the first length formed in the first direction. Hereinafter, the first length may be a length corresponding to a length of a width direction of the terminal block 33, and the first direction may be the width direction of the terminal block 33. The width direction is shown as the Y-direction in the figures. The first insertion groove 35a may be formed in a polygonal shape into the terminal block 33. In the present embodiment, the first insertion groove 35a is formed as a triangular cross-sectional shape. Accordingly and advantageously, a first protruding portion 43a (described below) may be stably inserted into the first insertion groove 35a by surface contact. While the first insertion groove 35a has the triangular cross-sectional shape in the present embodiment, the present disclosure is not necessarily limited to such a shape, and the first insertion groove may be formed in other polygonal shapes, such as a rectangular or square shape.

The second insertion groove 35b may be formed on the outer surface of the terminal block 33 to have the second length formed in the second direction. The second length may be the same as or similar to the first length. The second direction may be perpendicular to the first direction. In the figures, the second direction is indicated as the z direction. The second insertion groove 35b may be formed at edges of opposite sides of the terminal block 33. In particular, the second insertion groove 35b may be formed at edges of opposite sides of the terminal block 33, and the pair of second insertion grooves 35b may have the same length. The second insertion groove 35b may be formed in a tapered shape at the edge of the terminal block 33.

In a process of coupling the terminal plate 31 to the terminal block 33, a second protruding portion 43b may be disposed in surface contact with the terminal block 33.

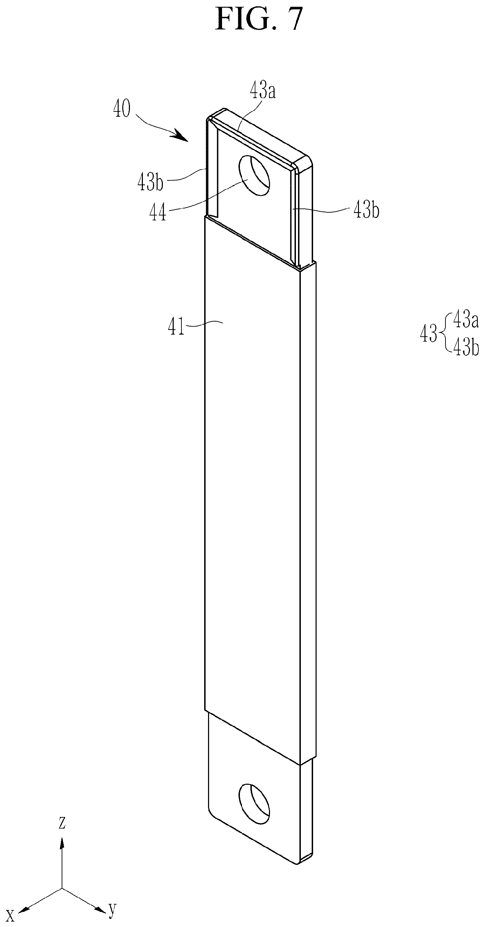

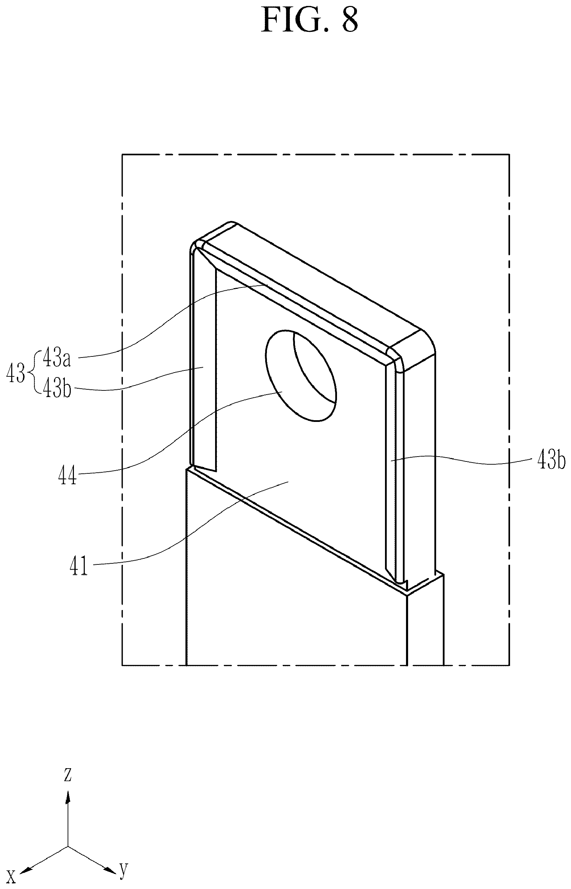

FIG. 7 is a perspective view schematically showing the rack busbar according to embodiments of the present disclosure, and FIG. 8 is a main portion perspective view schematically showing the rack busbar of FIG. 7.

As shown in FIG. 7 and FIG. 8, the rack busbar 40 may include a busbar plate 41 fixed by the fastening member 32 when a side surface of the busbar plate 41 is in surface contact with the terminal block 33, and a protruding portion 43 protruding from an edge of the busbar plate 41 may be inserted into an insertion groove.

The busbar plate 41 may be electrically connected to a surface of the terminal block 33 by the fastening member 32 when the busbar plate 41 is in surface contact with the surface of the terminal block 33. The busbar plate 41 may have a rectangular plate shape having a flat surface formed as the surface contacting the terminal block 33.

The second coupling hole 44 for coupling the fastening member 32 may be formed in the busbar plate 41. The second coupling hole 44 may be penetrate the busbar plate 41 to open to the first coupling hole 34 formed in the terminal block 33. The fastening member 32 may pass through the second coupling hole 44 to be fastened to the first coupling hole 34 of the terminal block 33. Thus, a stable electrical connection between the terminal block 33 and the rack busbar 40 is established.

The protruding portion 43 may protrude from an edge of the busbar plate 41. In particular, the protruding portion 43 may protrude from one edge position of the busbar plate and be inserted into the insertion portion 35.

The protruding portion 43 may include the first protruding portion 43a protruding from one edge of the busbar plate 41 to be inserted into the first insertion groove 35a. The protruding portion 43 may also include second protruding portions 43b protruding from edges on opposite sides of the busbar plate 41 and be inserted into the second insertion grooves 35b.

The first protruding portion 43a may protrude from an upper edge of the busbar plate 41. The first protruding portion 43a may be inserted into the first insertion groove 35a in a process of coupling the rack busbar 40 to the terminal portion 30. The first protruding portion 43a may be formed with a first length corresponding to a length in a width direction of the busbar plate 41, and the first protruding portion 43a may protrude as a single piece from one edge of the busbar plate 41. In other embodiments, the first protruding portion 43a may be formed as two or more pieces to correspond to the number of first insertion grooves 35a.

In the described embodiment, the first protruding portion 43a protrudes from one edge of the busbar plate 41 and has a triangular cross-sectional shape. But a shape of the first protruding portion 43a may be changed to a polygonal shape such as a hexahedron in order to correspond to a shape of the first insertion groove 35a.

The first protruding portion 43a may be closely inserted to an inner wall surface of the first insertion groove 35a to prevent foreign substances from being inserted into a position between the busbar plate 41 and the terminal block 33. The first protruding portion 43a may be inserted into and fixed to the first insertion groove 35a in a press-fit state.

The second protruding portions 43b may protrude from edges at opposite sides of the busbar plate 41 and be inserted into the second insertion grooves 35b. The second protruding portions 43b may protrude in a second length along an edge of the busbar plate 41. The second protruding portions 43b may be inserted into the second insertion grooves 35b in a process of coupling the rack busbar 40 to the terminal portion 30.

The second lengths of the second protruding portions 43b may be longer than the first length of the first protruding portion 43a. Because the lengths of the second protruding portions 43b are longer than the lengths of the first protruding portions 43a, foreign substances may be effectively blocked from flowing in a direction of the terminal portion 30 at a side surface position of the busbar plate 41.

The second protruding portions 43b may protrude from the edges of opposite sides of the busbar plate 41 when one side of the busbar plate 41 is connected to the first protruding portion 43a. Thus, the second protruding portions 43b may protrude from the edges of opposite sides of the busbar plate 41 with the first protruding portion 43a interposed therebetween. The second protruding portions 43b may be formed with the second lengths corresponding to lengths of the second insertion groove 35b, and the second protruding portions 43b may protrude from both edges of the busbar plate 41 with a triangular cross-sectional shape.

The second protruding portions 43b are described herein as being formed in a shape identical to or similar to the triangular cross-sectional shape of the first protruding portion 43a. But shapes of the second protruding portion 43b may be changed to a polygonal shape such as a hexahedron or the like so as to correspond to the shapes of the second insertion grooves 35b.

As described above, the first protruding portion 43a may be inserted into the first insertion groove 35a formed in a width direction of the terminal portion 30 to prevent dust from being introduced between the rack busbar 40 and the terminal portion 30 in an upper direction of the busbar plate 41. The second protruding portions 43b may be inserted into the second insertion grooves 35b formed on a side surface of the terminal portion 30 to prevent dust from flowing between the rack busbar 40 and the terminal portion 30 in a side surface direction of the busbar plate 41.

In the energy storage system 100 of the present embodiment, the protruding portion 43 may be inserted into the insertion portion 35 when the rack busbar 40 is electrically coupled to the terminal portion 30. It is thus possible to prevent a space from being formed between the rack busbar 40 and the terminal portion 30. Accordingly and advantageously, dust generated, for example, by vibration during land or sea evaluation of an uninterruptible power supply (UPS) or the like of the energy storage system 100, may not be introduced between the rack busbar 40 and the terminal portion 30. It is thereby possible to improve durability of the energy storage system 100 by preventing an increase in contact resistance that occurs in conventional art due to an inflow of dust between the rack busbar 40 and the terminal portion 30.

While this disclosure has been described in connection with what is presently considered to be practical embodiments, it is to be understood that the disclosure is not limited to the disclosed embodiments. On the contrary, the disclosure covers various modifications and equivalent arrangements.

**<Description of symbols>**

| | | | |
|---|---|---|---|
| 10: | cell assembly | 20: | rack case |
| 30: | terminal portion | 31: | terminal plate |
| 32: | fastening member | 33: | terminal block |
| 34: | first coupling hole | 35: | insertion portion |
| 35a: | first insertion groove | 35b: | second insertion groove |
| 40: | rack busbar | 41: | busbar plate |
| 43: | protruding portion | 43a: | first protruding portion |
| 43b: | second protruding portion | | |

## Claims

1. An energy storage system (100) comprising:
a cell assembly (10) including a plurality of battery cells;
a rack case in which the cell assembly (10) is accommodated;
a terminal portion (30) that is electrically connected to the battery cells and includes an insertion portion formed in an outer surface of the terminal portion (30); and
a rack busbar (40) that is fastened to the terminal portion (30) and includes a protruding portion (43) inserted into the insertion portion of the terminal portion (30), the protruding portion (43) being formed on a side surface of the rack busbar (40).

2. The energy storage system (100) as claimed in claim 1, wherein the terminal portion (30) comprises:
a terminal plate that is electrically connected to the battery cells inside the rack case; and
a terminal block (33) that is connected to the terminal plate and protrudes outside of the rack case, with the terminal block (33) including the insertion portion into which the protruding portion (43) is inserted.

3. The energy storage system (100) as claimed in claim 2, wherein the insertion portion comprises:
a first insertion groove (35a) formed in an outer surface of the terminal block (33), the first insertion groove (35a) extending a first length in a first direction; and
a second insertion groove (35b) formed in an outer surface of the terminal block (33), the second insertion groove (35b) extending a second length in a second direction.

4. The energy storage system (100) as claimed in claim 3, wherein the first direction is a width direction of the terminal block (33).

5. The energy storage system (100) as claimed in claim 3 or 4, wherein the first insertion groove (35a) has a triangular cross-sectional shape in the terminal block (33).

6. The energy storage system (100) as claimed in claims 3 to 5, wherein the second direction is a length direction of the terminal block (33).

7. The energy storage system (100) as claimed in claim 5 or 6, wherein second insertion grooves (35b) are formed at edges of opposite sides of the terminal block (33).

8. The energy storage system (100) as claimed in claim 7, wherein the second insertion grooves (35b) are formed in tapered shapes at the edges of the opposite sides of the terminal block (33).

9. The energy storage system (100) as claimed in claims 2 to 8, wherein the rack busbar (40) includes a busbar plate that is in contact with a surface of the terminal block (33), the busbar plate being fixed to the terminal block (33) by a fastening member (32) and, and
wherein the protruding portion (43) protrudes from an edge of the busbar plate.

10. The energy storage system (100) as claimed in claim 9, wherein the protruding portion (43) comprises:
a first protruding portion (43a) that protrudes from one edge of the busbar plate and is inserted into the first insertion groove (35a); and
second protruding portions (43b) that protrude from edges of opposite sides of the busbar plate and are inserted into the second insertion grooves (35b).

11. The energy storage system (100) as claimed in claim 10, wherein each of the first and second protruding portions (43b) are formed in triangular cross-sectional shapes.

12. The energy storage system (100) as claimed in claim 10 or 11, wherein the first and second protruding portions (43b) are connected to each other at the edge of the busbar plate.

13. An energy storage system (100) comprising:
a plurality of battery cells;
a case accommodating the battery cells;
a terminal portion (30) electrically connected to the battery cells, the terminal portion (30) including at least one groove formed in a surface of the terminal portion (30); and
a rack busbar (40) fastened to the terminal portion (30), the rack busbar (40) including at least one a protruding portion (43) inserted into the at least one groove of the terminal portion (30), the protruding portion (43) being formed on a surface of the rack busbar (40).

14. The energy storage system (100) as claimed in claim 13, wherein the terminal portion (30) comprises:
a terminal plate that is electrically connected to the battery cells inside the rack case; and
a terminal block (33) that is connected to the terminal plate and protrudes outside of the rack case, with the terminal block (33) including the insertion portion into which the protruding portion (43) is inserted.

15. The energy storage system (100) as claimed in claim 14, wherein the insertion portion comprises:
a first insertion groove (35a) formed in an outer surface of the terminal block (33), the first insertion groove (35a) extending a first length in a first direction; and a second insertion groove (35b) formed in an outer surface of the terminal block (33), the second insertion groove (35b) extending a second length in a second direction and/or wherein the first direction is a width direction of the terminal block (33) and/or wherein the first insertion groove (35a) has a triangular cross-sectional shape in the terminal block (33) and/or wherein the second direction is a length direction of the terminal block (33) and/or wherein second insertion grooves (35b) are formed at edges of opposite sides of the terminal block (33) and/or wherein the second insertion grooves (35b) are formed in tapered shapes at the edges of the opposite sides of the terminal block (33).
